# EUROPEAN PATENT APPLICATION

(11) **EP 4 462 049 A2**
(43) Date of publication of application: **13.11.2024**
(21) Application number: 24174996.9
(22) Date of filing: 08.05.2024
(51) Int. Cl.: F25J 1/00

(54) **APPARATUS AND METHOD FOR HORIZONTAL TRANSPORT AND VERTICAL INSTALLATION OF HEAT EXCHANGER**

(30) Priority: 09.05.2023 US 202363465215 P; 26.03.2024 US 202418616711
(71) Applicant: Hercules Project Company LLC, Allentown, PA 18106 (US)
(72) Inventor: BUTLER, Christopher R, Allentown, PA 18104 (US); DEBRAH, Paul I., Macungie, PA 18062 (US); SAMARAJIVA, Prasad M., Zionsville, PA 18092 (US); SCHENK, Heather Lynn, Macungie, PA 18062 (US); TIEMANN, Kevin E, Fleetwood, PA 19522 (US); VUJCICH, Damian Luke, 2023KJ Haarlem (NL)
(74) Representative: Beck Greener LLP

(57) **Abstract**

An apparatus for modular heat exchanger assembly is provided for horizontal transport and vertical orientation installation can include a frame that can be configured to retain a heat exchanger for transport and installation. The frame can facilitate transportation of the heat exchanger while the heat exchanger is in its horizontal orientation and can also facilitate lifting of the frame to orient the heat exchanger in its vertical orientation for installation and use.

## Description

### CROSS-REFERENCE TO RELATED APPLICATIONS

This application claims the priority of US Provisional Application No. 63/465,215 filed on May 9, 2023, which is incorporated by reference herein in its entirety.

### FIELD

The present innovation relates to heat exchangers and apparatuses and methods for transportation and installation of heat exchangers.

### BACKGROUND OF THE INVENTION

Coil-wound heat exchangers (CWHEs) are often very tall pieces of equipment that require access for maintenance and operation. Historically, CWHEs have been designed to be self-supporting on a foundation, with maintenance access platforms, ladders, and other appendages, to be supported from the CWHE equipment. In this traditional method, these appendages have been installed onto the CWHE after the CWHE has been transported to the project site and lifted via crane or other equipment onto a foundation. Typically, if the CWHE is not self-supporting, the CWHEs are shipped to the project site and mounted into a support structure via heavy lift equipment such as cranes. U.S. Patent No. 11,391,512 discloses an example of a CWHE and a construction process for installing a CWHE. The maintenance access and interconnections that are external to the CWHE are often built or completed by construction at the project location. The construction can require a large amount of scaffolding (e.g. 10-100 meters of scaffolding) to permit the CWHE, external CWHE appendages, insulation, and access or supporting structures that provide access to the CWHE to be assembled and constructed on site. This fabrication and construction process can often take many months to complete and can require complicated construction processes that include use of large cranes, a significant amount of scaffolding, and a significant number of construction personnel.

### SUMMARY OF THE INVENTION

The conventional approach for fabrication and installation of heat exchangers such as coil-wound heat exchangers (CWHEs) results in excessive installation delays that can lead to increased costs and delay in the start-up and/or commissioning of a plant. A new design and approach for large heat exchanger fabrication and installation is desired to permit easier and quicker installation on site, resulting in quicker facility start-up while also facilitating use of conventional and relatively standard shipping and transportation devices and methods. Embodiments of the present invention, for modular heat exchanger assembly for horizontal transport and vertical orientation installation and processes for making and using the same, can be configured to permit a CWHE or other type of large heat exchanger or other equipment to be fabricated and shipped for ease of transport and subsequent installation. For example, embodiments can be adapted so that a CWHE structure is transported so that it extends horizontally along its longitudinal direction (e.g. its longest dimension) in a horizontal orientation for transport and can subsequently be adjusted on-site into a vertical orientation in which it extends vertically along its longitudinal direction such that the height of the installed CWHE structure is the distance in which the CWHE structure vertically extends above the ground. Embodiments can be sized and configured to permit transport of the CWHE structure in accordance with commonly available shipping and hauling practices for ease of transportation and can have a sufficiently sturdy frame to facilitate adjustment of the orientation of the CWHE structure into its vertical orientation. Embodiments can permit installation of a CWHE to be performed without requiring use of large scaffolding structures and/or involving large teams of construction personnel.

In a first aspect, an apparatus for modular heat exchanger assembly for horizontal transport and vertical orientation installation is provided. Embodiments of the apparatus can include a frame having a case. The case can include a top, a bottom, and a plurality of sides extending between the top and bottom. The case can also have a side opening in communication with an inner chamber defined between the sides, the top, and the bottom. The frame can also include at least one side cap attached to the case to cover the side opening. The frame can have a length that extends in a longitudinal direction from the top to the bottom as well.

The apparatus can also include a heat exchanger positioned within the inner chamber. The frame can be sized and configured to facilitate transport of the apparatus in a horizontal orientation for transportation so that the length extends horizontally when the apparatus is in the horizontal orientation. The frame can also be sized and configured to facilitate positioning of the apparatus in a vertical orientation for installation at a site so that the length extends vertically when the apparatus is in the vertical orientation.

In some embodiments, the heat exchanger can be positioned in the inner chamber so that the top of the heat exchanger can extend from a top side of the frame, or end of the frame, and so that the top of the heat exchanger extends from the end of the frame during transport while the apparatus is in its horizontal orientation and extends from the top of the frame when the apparatus is in its vertical orientation. In other implementations, the heat exchanger can be entirely encased within the frame when it is positioned in the inner chamber. In some embodiments, the heat exchanger may have multiple shells and may be able to be separated into multiple modules to facilitate transportation or installation.

In a second aspect, the heat exchanger of the apparatus can be a coil-wound heat exchanger (CWHE). In other embodiments, the heat exchanger may be another type of heat exchanger.

In a third aspect, the at least one side cap can be provided so that each side cap includes an outer side, platforms extending from the outer side, and stairways and/or ladders extending from the outer side. The stairways and/or ladders can be positioned in the inner chamber and the platforms can be positioned in the inner chamber. The outer side can extend between the top and the bottom to define a side of the frame that encloses the open side of the case.

In other configurations, each side cap can be provided so that each side cap includes an outer side and platforms that extending from the outer side. The platforms can be positioned in the inner chamber. The outer side can extend between the top and the bottom to define a side of the frame that enclosed the open side of the case. Stairways and/or ladders can be provided that are defined on the outer side as well to help provide a means of access between the platforms when the apparatus is in its vertical orientation.

In a fourth aspect, the apparatus can also include a plurality of retention devices within the inner chamber positioned to engage the heat exchanger to retain the position of the heat exchanger in the inner chamber. Each of the retention devices can be adjustable between a blocked position and a released position. Each of the retention devices can have at least one blocking element that is removable to adjust the retention device from the blocked position to the released position.

In a fifth aspect, embodiments of the apparatus of the first aspect can include one or more features of the second aspect, third aspect, and/or fourth aspect. It should therefore be understood that embodiments of the apparatus can include other elements and configurations.

In a sixth aspect, a process of installing a heat exchanger is provided. Embodiments of the process can include forming a case and at least one side cap, positioning a heat exchanger in an inner chamber of the case, attaching the at least one side cap to the case to form a frame and cover an open side of the case to enclose the heat exchanger within the inner chamber, maintaining the frame in a horizontal orientation during transport of the heat exchanger to a site, and moving the frame into a vertical orientation to install the heat exchanger at the site.

In a seventh aspect, the process can be adapted so that the heat exchanger is a CWHE or other type of heat exchanger.

In an eight aspect, the process can be adapted so that the horizontal orientation is an orientation in which a length of the case that extends in a longitudinal direction between a top of the case and a bottom of the case extends horizontally. The vertical orientation can be an orientation in which a length of the case that extends in a longitudinal direction between a top of the case and a bottom of the case extends vertically.

In a ninth aspect, the process can include other steps. For example, the process can include positioning retention devices in the inner chamber to engage the heat exchanger to maintain a position of the heat exchanger in the inner chamber. As another example, the process can include adjusting positions of the retention devices from a blocked position to a released position. Such an adjusting of positions can occur after the frame is moved into the vertical orientation.

In a tenth aspect, the attaching of the at least one side cap to the case to form the frame can include positioning each side cap so that platforms are positioned in the inner chamber and welding or fastening each side cap to the case to cover the open side of the case. The attaching can be performed so that stairways or ladders are defined on the outer side of the case for providing access to the platforms when the apparatus is in its vertical orientation. The attaching can alternatively be performed so that stairways or ladders are defined opposite the outer side of the case so the stairways or ladders are in the inner chamber for providing access to the platforms when the apparatus is in its vertical orientation.

In an eleventh aspect, the moving of the frame into the vertical orientation to install the heat exchanger at the site can include lifting the frame via at least one lifting device to adjust the orientation of the frame to the vertical orientation. The at least one lifting device can include at least one crane (e.g. multiple cranes, a single crane, etc.). The at least one lifting device can also include other types of lifting devices (e.g. one or more jacking towers, etc.).

In a twelfth aspect, the maintaining of the frame in the horizontal orientation during transport of the heat exchanger to the site can include loading the frame in a transportation vehicle while the frame is in the horizontal orientation and unloading the frame from the transportation vehicle while the frame is in the horizontal orientation. The transportation vehicle can include a ship, a railcar, a self-propelled modular transporter (SPMT), or other type of transportation vehicle. The loading and unloading can be provided via a hauler, a crane, or other type of loading or unloading device.

In a thirteenth aspect, embodiments of the process of the sixth aspect can include one or more features of the seventh aspect, eighth aspect, ninth aspect, tenth aspect, eleventh aspect and/or twelfth aspect. Embodiments of the process can also utilize an apparatus of the first aspect or any other embodiment of the apparatus discussed herein. It should therefore be understood that embodiments of the process can include other process steps as well as other elements.

In a fourteenth aspect, an apparatus for modular heat exchanger assembly for horizontal transport and vertical orientation installation is provided. The apparatus can include a frame including a case. The case can have a top, a bottom, and a plurality of sides extending between the top and bottom. The case can also have a side opening in communication with an inner chamber defined between the sides, the top, and the bottom. At least one side cap can be attached to the case to cover the side opening. The at least one side cap can have an outer side, platforms extending from the outer side, and stairways and/or ladders extending from the outer side. The stairways and/or ladders can be positioned in the inner chamber or external to the inner chamber and the platforms can be positioned in the inner chamber. The outer side can extend between the top and the bottom. The frame can have a length that extends in a longitudinal direction from the top to the bottom. A coil-wound heat exchanger (CWHE) can be positioned within the inner chamber. The frame can be sized and configured to facilitate transport of the apparatus in a horizontal orientation for transportation such that the length extends horizontally when the apparatus is in the horizontal orientation. The frame can also be sized and configured to facilitate positioning of the apparatus in a vertical orientation for installation at a site. The length can extend vertically when the apparatus is in the vertical orientation. The length of the heat exchanger can also extend horizontally when the apparatus is in the horizontal orientation and the length of the heat exchanger can also extend vertically to define a height of the heat exchanger when the heat apparatus is in the vertical orientation.

In a fifteenth aspect, the apparatus of the fourteenth aspect can include a plurality of retention devices within the inner chamber positioned to engage the heat exchanger to retain a position of the heat exchanger in the inner chamber. Each of the retention devices can be adjustable between a first position and a second position (e.g. a blocked position and a released position). Each of the retention devices can have at least one blocking element that is removable to adjust the retention device from the first position to the second position, for example.

Several preferred aspects of the apparatus and processes according to the present invention are outlined below, numbered Aspects 1 to 20.

Aspect 1: An apparatus for modular heat exchanger assembly for horizontal transport and vertical orientation installation comprising:
a frame comprising:
   a case having a top, a bottom, and a plurality of sides extending between the top and bottom, the case having a side opening in communication with an inner chamber defined between the sides, the top, and the bottom, and
   at least one side cap attached to the case to cover the side opening,
   the frame having a length that extends in a longitudinal direction from the top to the bottom;
a heat exchanger positioned within the inner chamber; and
wherein the frame is sized and configured to facilitate transport of the apparatus in a horizontal orientation for transportation, the length extending horizontally when the apparatus is in the horizontal orientation; and
the frame is sized and configured to facilitate positioning of the apparatus in a vertical orientation for installation at a site, the length extending vertically when the apparatus is in the vertical orientation.

Aspect 2: The apparatus of Aspect 1, wherein the heat exchanger is a coil-wound heat exchanger (CWHE).

Aspect 3: The apparatus of Aspect 1, wherein the at least one side cap comprises:
an outer side, platforms extending from the outer side, and stairways and/or ladders extending from the outer side, the stairways and/or ladders positioned in the inner chamber and the platforms positioned in the inner chamber, the outer side extending between the top and the bottom.

Aspect 4: The apparatus of Aspect 1, comprising:
a plurality of retention devices within the inner chamber positioned to engage the heat exchanger to retain a position of the heat exchanger in the inner chamber.

Aspect 5: The apparatus of Aspect 4, wherein each of the retention devices is adjustable between a blocked position and a released position.

Aspect 6: The apparatus of Aspect 5, wherein each of the retention devices has at least one blocking element that is removable to adjust the retention device from the blocked position to the released position.

Aspect 7: A process of installing a heat exchanger, comprising:
forming a case and at least one side cap;
positioning a heat exchanger in an inner chamber of the case;
attaching the at least one side cap to the case to form a frame and cover an open side of the case and enclose the heat exchanger within the inner chamber,
maintaining the frame in a horizontal orientation during transport of the heat exchanger to a site; and
moving the frame into a vertical orientation to install the heat exchanger at the site.

Aspect 8: The process of Aspect 7, wherein the heat exchanger is a coil-wound heat exchanger (CWHE).

Aspect 9: The process of Aspect 7, wherein the horizontal orientation is an orientation in which a length of the case that extends in a longitudinal direction between a top of the case and a bottom of the case extends horizontally.

Aspect 10: The process of Aspect 7, wherein the vertical orientation is an orientation in which a length of the case that extends in a longitudinal direction between a top of the case and a bottom of the case extends vertically.

Aspect 11: The process of Aspect 10, wherein the horizontal orientation is an orientation in which a length of the case that extends in a longitudinal direction between a top of the case and a bottom of the case extends horizontally.

Aspect 12: The process of Aspect 7, comprising;
positioning retention devices in the inner chamber to engage the heat exchanger to maintain a position of the heat exchange in the inner chamber.

Aspect 13: The process of Aspect 12, comprising:
adjusting positions of the retention devices from a first position to a second position.

Aspect 14: The process of Aspect 7, wherein the attaching the at least one side cap to the case to form the frame comprises:
positioning each side cap so that platforms and stairways and/or ladders of the side cap are positioned in the inner chamber; and
welding or fastening each side cap to the case to cover the open side of the case.

Aspect 15: The process of Aspect 7, wherein the moving the frame into a vertical orientation to install the heat exchanger at the site comprises lifting the frame via at least one lifting device to adjust the orientation of the frame to the vertical orientation.

Aspect 16: The process of Aspect 15, wherein the at least one lifting device comprises at least one crane.

Aspect 17: The process of Aspect 7, wherein the maintaining the frame in the horizontal orientation during transport of the heat exchanger to the site comprises:
loading the frame in a transportation vehicle while the frame is in the horizontal orientation; and
unloading the frame from the transportation vehicle while the frame is in the horizontal orientation.

Aspect 18: An apparatus for modular heat exchanger assembly for horizontal transport and vertical orientation installation comprising:
a frame comprising:
   a case having a top, a bottom, and a plurality of sides extending between the top and bottom, the case having a side opening in communication with an inner chamber defined between the sides, the top, and the bottom, and
   at least one side cap attached to the case to cover the side opening, the at least one side cap having an outer side, platforms extending from the outer side, and stairways and/or ladders extending from the outer side, the stairways and/or ladders positioned in the inner chamber or positioned external to the inner chamber and the platforms positioned in the inner chamber, the outer side extending between the top and the bottom.
   the frame having a length that extends in a longitudinal direction from the top to the bottom;
a coil-wound heat exchanger (CWHE) positioned within the inner chamber; and
wherein the frame is sized and configured to facilitate transport of the apparatus in a horizontal orientation for transportation, the length extending horizontally when the apparatus is in the horizontal orientation; and
the frame is sized and configured to facilitate positioning of the apparatus in a vertical orientation for installation at a site, the length extending vertically when the apparatus is in the vertical orientation.

Aspect 19: The apparatus of Aspect 18, comprising:
a plurality of retention devices within the inner chamber positioned to engage the heat exchanger to retain a position of the heat exchanger in the inner chamber; each of the retention devices being adjustable between a blocked position and a released position.

Aspect 20: The apparatus of Aspect 19, wherein each of the retention devices has at least one blocking element that is removable to adjust the retention device from the blocked position to the released position.

Other details, objects, and advantages of the present invention for modular heat exchanger assembly for horizontal transport and vertical orientation installation and methods of making and using the same will become apparent as the following description of certain exemplary embodiments thereof proceeds.

### BRIEF DESCRIPTION OF DRAWINGS

Exemplary embodiments of apparatuses for modular heat exchanger assembly for horizontal transport and vertical orientation installation and methods of making and using the same are shown in the drawings included herewith. It should be understood that like reference characters used in the drawings may identify like components.
Figure 1 is a flow chart illustrating a first exemplary embodiment of a fabrication process for forming a first exemplary embodiment of an apparatus 10 for modular heat exchanger assembly for horizontal transport and vertical orientation installation.
Figure 2 is another flow chart illustrating the first exemplary embodiment of the fabrication process for forming a first exemplary embodiment of an apparatus 10 for modular heat exchanger assembly for horizontal transport and vertical orientation installation.

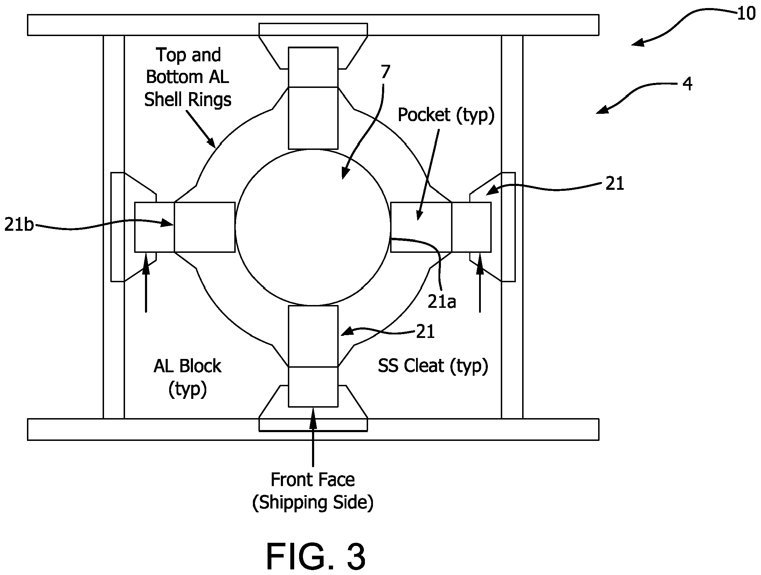

Figure 3 is a cross-sectional view of the first exemplary embodiment of an apparatus 10 for modular heat exchanger assembly for horizontal transport and vertical orientation installation that illustrates a plurality of retention devices 21 of the apparatus 10 that are adjustable between a blocked position that can provide tight engagement with a heat exchanger 7 to prevent or reduce vibration and movement during transport and an released position that can provide engagement with the heat exchanger 7 to permit the heat exchanger to expand or compress in an axial direction during use while in the vertical orientation to accommodate expansion and other motion that can occur during heat exchanger operations while still providing stiff support in a radial direction perpendicular to the axial direction horizontally while the apparatus 10 and the heat exchanger 7 are in a vertical orientation. The blocked and released positions can also be considered first and second positions where the blocked position can be considered a first position and the released position can be considered a second position or vice versa (e.g. the blocked position can be considered the second position and the released position can be considered the first position).
Figure 4 is a perspective view of the first exemplary embodiment of an apparatus 10 for modular heat exchanger assembly for horizontal transport and vertical orientation installation positioned in its horizontal orientation for transport via a shipping vessel 17.
Figure 5 is a top view of the first exemplary embodiment of an apparatus 10 for modular heat exchanger assembly for horizontal transport and vertical orientation installation positioned in its horizontal orientation for transport via a shipping vessel 17.
Figure 6 is a side view of the first exemplary embodiment of an apparatus 10 for modular heat exchanger assembly for horizontal transport and vertical orientation installation positioned in its horizontal orientation 19 for land-based hauling.
Figure 7 is a schematic drawing depicting an exemplary process for hauling an apparatus 10 in the horizontal orientation onto a transportation vehicle by a lifting process for transport via a waterway.
Figure 8 is a schematic drawing depicting an exemplary process for loading an apparatus 10 in the horizontal orientation onto and/or unloading an apparatus 10 in the horizontal orientation from a transportation vessel or vehicle 17.
Figure 9 is a schematic drawing depicting an exemplary process for loading an apparatus 10 in the horizontal orientation onto and/or unloading an apparatus 10 in the horizontal orientation from a transportation vessel or vehicle 17.
Figure 10 is a flow chart illustrating a first exemplary embodiment of an installation process for installing the first exemplary embodiment of an apparatus 10 for modular heat exchanger assembly for horizontal transport and vertical orientation installation so that the apparatus is in its vertical orientation V after installation.
Figure 11 is a perspective view of the first exemplary embodiment of an apparatus 10 for modular heat exchanger assembly for horizontal transport and vertical orientation installation in its vertical orientation.

### DETAILED DESCRIPTION OF THE INVENTION

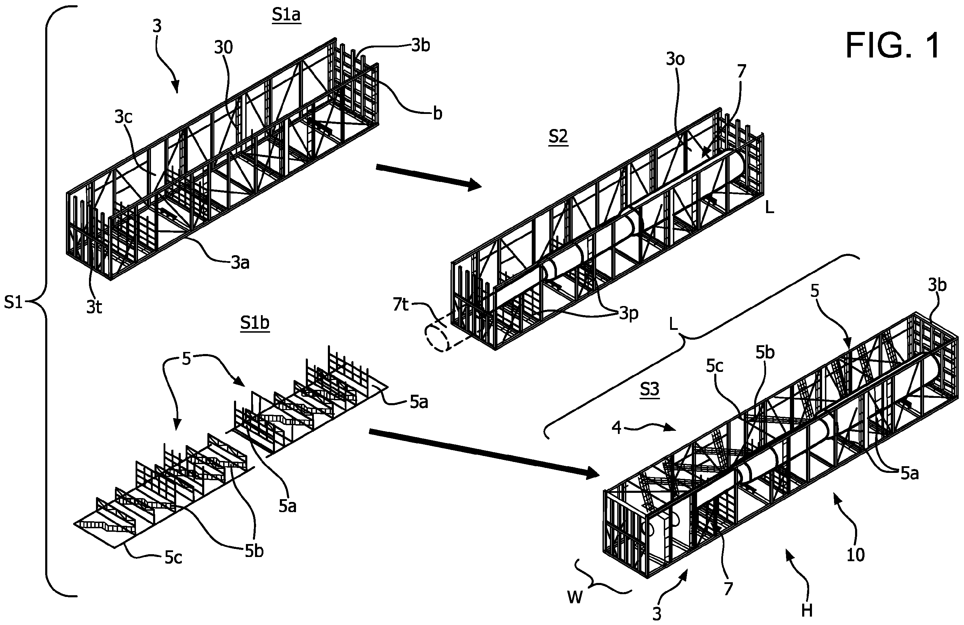

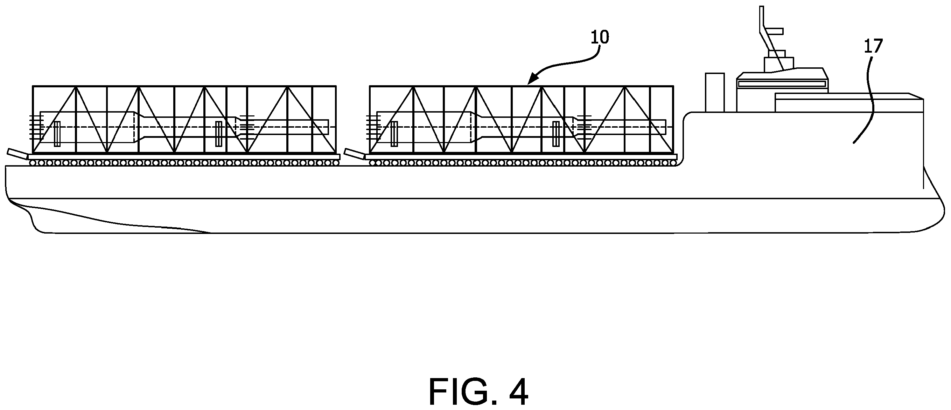

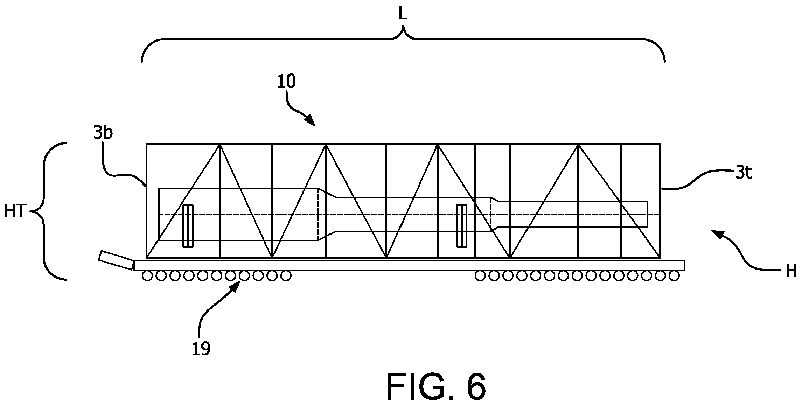

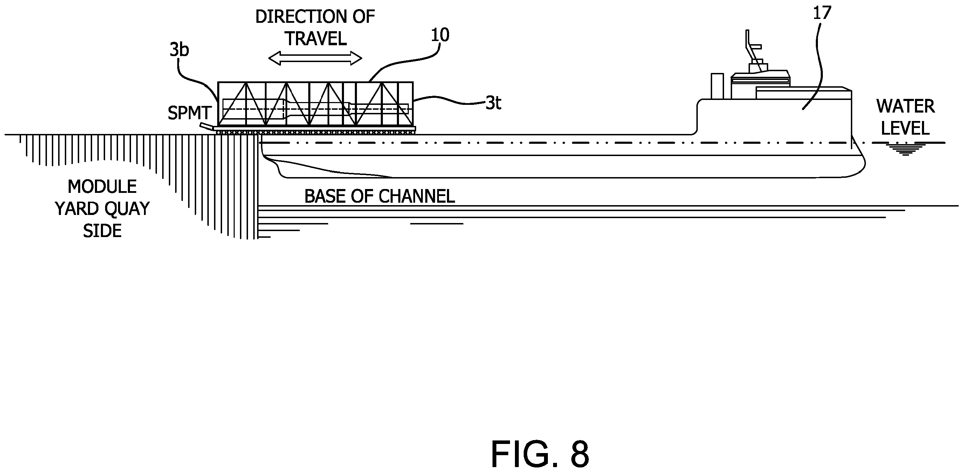

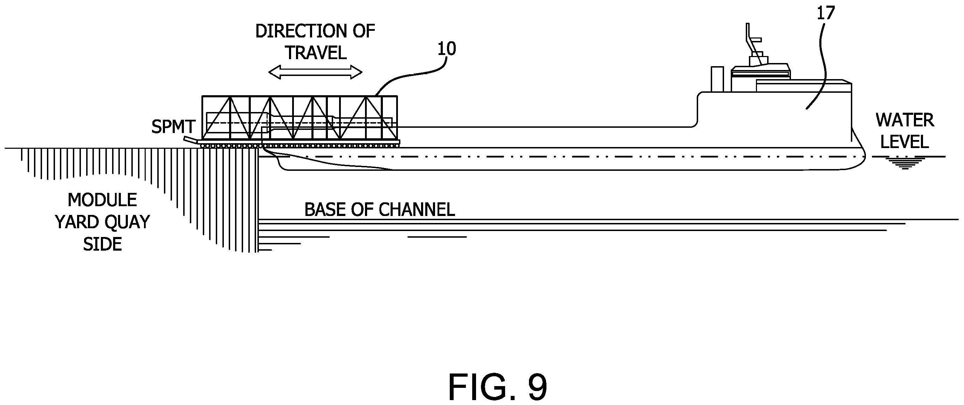

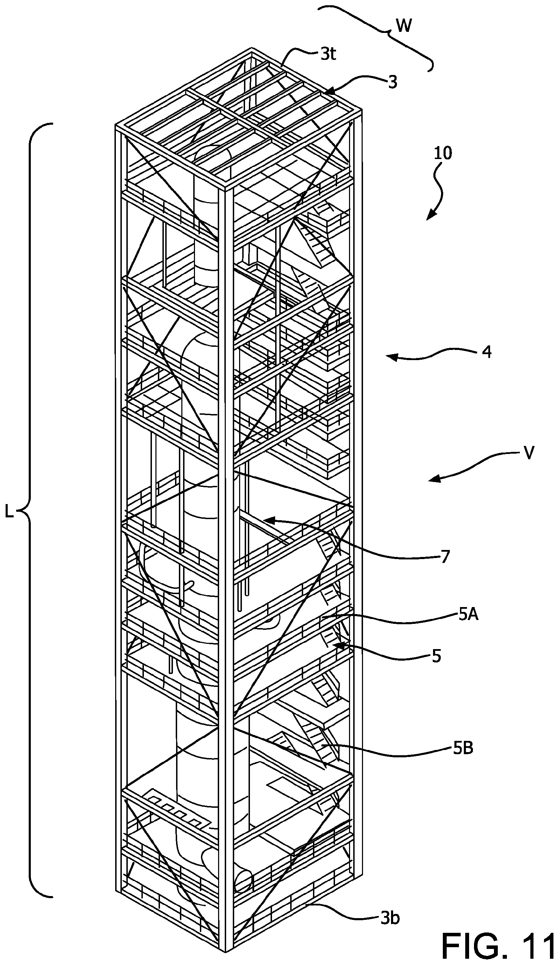

Referring to Figures 1-11, an apparatus 10 for modular heat exchanger assembly for horizontal transport and vertical orientation installation can be provided to permit the apparatus 10 to be transported and hauled in its horizontal orientation H via at least one transportation device 17 (e.g. as shown in Figures 4-5 in which the transportation device 17 can be a ship, barge or other type of water transport vehicle) and/or positionable on ground support 19 so that the apparatus 10 can be in a horizontal orientation H for being lifted, or hauled, vertically for unloading and loading on and off of different transportation devices as shown in Figure 6. Transportation of the apparatus 10 while it is in its horizontal orientation can permit trucks, trailers, railcars, ships, or other transportation vehicles to more easily transport the apparatus to a site for installation. The ease of transportation can also permit the transportation to be provided at a much lower cost, without the use of highly specialized equipment. The size and shape of the apparatus 10 can be sized and configured to facilitate suitable installation while also permitting standard transportation and shipping devices and protocols to apply to the loading, unloading, and transport of the apparatus from a site of fabrication to a site of installation.

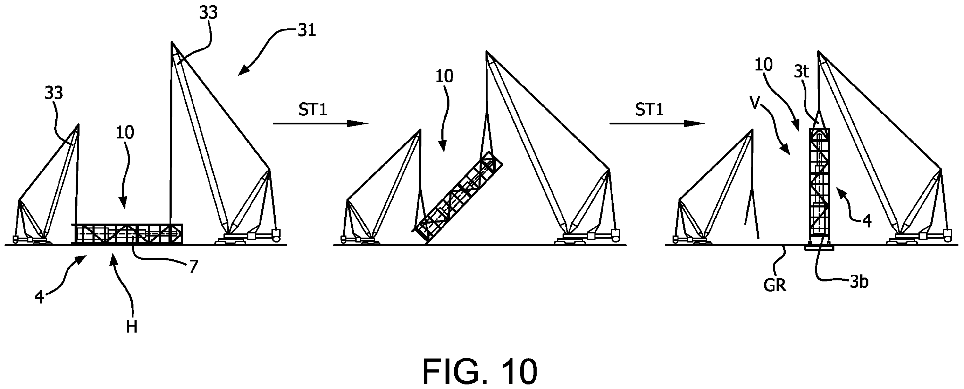

Once on the site at which the heat exchanger 7 of the apparatus 10 is to be installed, one or more lifting devices 31 (e.g. one or more cranes 33) can be utilized to move the apparatus 10 to adjust its orientation from its horizontal orientation H to its vertical orientation V as shown in Figure 10, for example.

Once lifted and in the vertical orientation V, additional installation work can be performed to integrate the heat exchanger 7 encased in the frame 4 of the apparatus 10 into a plant or industrial facility without such work having to require formation of larger and tall scaffolding structures for installation of the heat exchanger. This type of large scaffolding can be avoided by use of the lifting device 31 and the ability of the frame of the apparatus 10 to facilitate supporting the heat exchanger 7 in the vertical orientation after the orientation of the apparatus 10 is adjusted to the vertical orientation V. The type of integration work that can be performed after the apparatus is in the vertical orientation V can include connecting the heat exchanger into the plant or facility to provide cooling and/or heating to one or more process fluids of the plant or facility. Workers can utilize the stairways and/or ladders 5b and platforms 5a to perform this type of installation work after the apparatus 10 is in its vertical orientation.

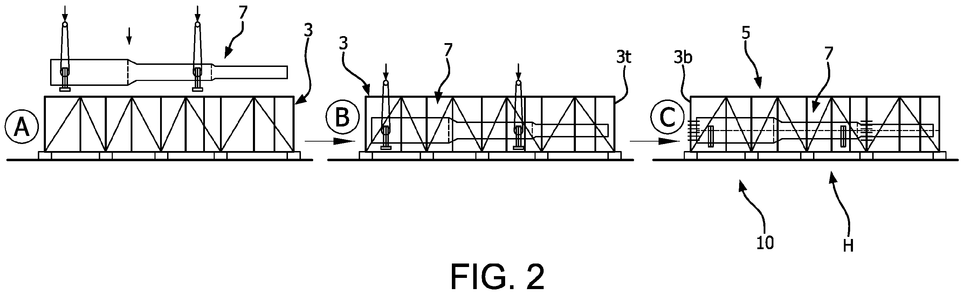

As may best be appreciated from Figures 1 and 2, the apparatus 10 can be fabricated by use of prefabricated elements. The prefabricated elements can include metal worked elements such as a heat exchanger retaining case 3 and one or more side caps 5 that are sized and configured to enclose an inner chamber 3c of the case 3. The inner chamber 3c can be sized to retain a heat exchanger 7 within the chamber 3c. After the heat exchanger 7 is positioned within the inner chamber 3c, one or more side caps 5 can be positioned over the open side 30 and attached to the case 3 to cover the open side 3o defined in the case 3 and form the frame 4 that encloses the heat exchanger 7 positioned in the inner chamber 3c.

For example, in a first step S1 the case 3 having the open side 3o as well as the side cap(s) 5 can be fabricated. This fabrication can occur in a case manufacturing step S1a that can occur independently or at the same time as a side cap manufacturing step S1b. A metal working facility can perform the fabrication of the case 3 and one or more side caps 5. Alternatively, different facilities can fabricate the case 3 and one or more side caps 5 and the side cap(s) 5 and/or case 3 can be transported to a site for having the heat exchanger 7 inserted into the case 3 and having the side cap(s) 5 attached to the case 3 to cover the open side 3o.

The one or more side caps 5 can be fabricated to define an enclosing side of a frame 4 to cover the open side 3o while also including other structure to be positioned in the chamber 3c to facilitate installation, operation, and maintenance of the heat exchanger 7 once it gets to a site for installation. The structure defined by each side cap 5 can include metal stairways and/or ladders 5b and platforms 5a that can extend from an outer side 5c of the side cap 5. In some configurations, when attached to the case 3 to form the frame 4, the platforms 5a and stairways and/or ladders 5b can be positioned within the chamber 3c and the outer side 5c can be positioned to define a side of the frame 4 that covers the open side 3o of the case 3. In other configurations, when attached to the case 3 to form the frame 4, the platforms 5a can be positioned within the chamber 3c and the stairways and/or ladders 5b can be positioned on the external side of the frame 4 and be external to the chamber 3c. In such an embodiment, it is also contemplated that internal stairways and/or ladders 5b can also be included so that there are some ladders and/or stairways on an external side of the frame and also some internal to the frame within the chamber 3c.

The case 3 can be fabricated from metal and can include a body that has a plurality of sides 3a that extend between a top 3t and a bottom 3b. The top 3t of the case 3 can be positioned to define a top of the apparatus 10 when it is in the vertical orientation V. The bottom 3b of the case can be positioned to define a bottom of the apparatus 10 when it is in the vertical orientation V. When the apparatus 10 is in the horizontal orientation, the bottom 3b and top 3t can be opposite ends of the body of the case 3. Multiple sides 3a of the body can extend in a longitudinal direction along a length L of the apparatus 10 between the top 3t and bottom 3b. The bottom 3b and top 3t can extend upwardly from a lower side to an upper side when the apparatus 10 is in its horizontal orientation to define the height HT of the apparatus 10 when it is in the horizontal orientation H. The height HT can be a value or distance that is smaller than the length L.

For rectangular shaped frames 4, there may be three sides 3a formed for the case 3 and the side cap(s) 5 can be configured to provide a fourth side to enclose the open side 3o between the top 3t and bottom 3b to from the frame 4. Other frames 4 could have other shapes (e.g. hexagonal, pentagonal, etc.) and may have different numbers of sides.

The heat exchanger 7 can also be fabricated and subsequently transported to a yard or installation site at which the frame 4 and one or more side caps 5 can be located or delivered. The heat exchanger 7 can be a coil-wound heat exchanger or other suitable heat exchanger in some embodiments. The heat exchanger 7 can be positioned on stools configured to retain and hold the heat exchanger 7 until it is to be lifted and positioned into the inner chamber 3c of the case 3.

After the case 3 is fabricated and a heat exchanger 7 is created, the heat exchanger 7 can be inserted into the chamber 3c of the case by being lifted and/or lowered so that the heat exchanger 7 is lifted up over the open side 3o and subsequently passed through the open side 3o and positioned in the chamber 3c in a pre-defined heat exchanger retaining element of the defined chamber 3c. Figure 2 illustrates an example of this heat exchanger positioning process of step S2 of Figure 1. For example, one or more hoists or cranes can be used to lower the heat exchanger 7 passed the open side 3o and into the chamber 3c for positioning therein (e.g. as illustrated in steps A-B of Figure 2).

Platform structures 3p can be defined in the chamber 3c of the case 3 so that the platform structures 3p accommodate the receipt of the heat exchanger 7 and also define a portion of a platform floor to be fully defined after attachment of one or more side caps 5 having corresponding platforms 5a positioned and configured for attachment with the case platform structures 3p for defining platforms around the heat exchanger 7 at different spaced apart locations along a length of the heat exchanger 7. The stairways and/or ladders 5b of the one or more side caps 5b can be configured and positioned so the stairways and/or ladders can extend from a bottom 3b within the chamber 3c to upper locations at the various platforms defined by the side cap platforms 5a and internal case platform structures 3p after the side cap(s) 5 are attached to the case 3.

After the heat exchanger 7 is in the desired location, the one or more side caps 5 can be positioned over the open side 3o above the heat exchanger 7 and attached to the adjacent sides 3a, top 3t, and bottom 3b to attach the side cap(s) 5 to the case 3, enclose the chamber 3c, and form the frame 4 in a third step S3 of fabrication. This attachment can be performed via welding or other suitable attachment mechanisms (e.g. welding, fasteners, etc.) As noted above, the side cap(s) 5 can be positioned so that the outer side 5c of each side cap 5 at least partially defines a side of the formed frame 4 that extends between the top 3t and bottom 3b. Structure that extends inwardly into the chamber 3c from the outer side can be positioned in the chamber 3c around the heat exchanger 7. The structure can include defined stairway runs and/or ladder runs and platforms 5a that are defined to be positioned at different vertical locations around and adjacent to the heat exchanger. The defined stairways and/or ladders 5b and platforms 5a can be positioned to facilitate access to the heat exchanger and maintenance of the heat exchanger 7 after it is installed and in its vertical orientation V. For example, the stairways and/or ladders 5b can be defined to run along an inner side of the chamber 3c to provide a pathway for access to various upper locations of the heat exchanger. The platforms 5a can be defined to extend into the chamber 3c and help define a central opening defined by the platform 5a of the side cap 5 and a corresponding internal platform structure 3p defined in the chamber 3c of the case 3 to permit the heat exchanger 7 to be positioned between the platforms 5a and 3p while positioned in the chamber 3c via positioning and attachment of the side cap 5 of that platform 5a.

After the one or more side caps 5 are attached to the case 3 to form the frame 4 and/or prior to the attachment of the one or more side caps 5, a plurality of heat exchanger retention devices 21 can be positioned in the chamber 3c around a diameter or periphery of the heat exchanger body at different spaced apart locations along a length of the heat exchanger. The positioning of the retention devices 21 may best be appreciated from Figure 3. Each retention device 21 can be attachment to an inner side of the frame 4 within the chamber 3c to an inner distal end 21a of the device engages and/or is in contact with the body of the heat exchanger 7 to help secure the heat exchanger 7 and protect the heat exchanger 7 from movement that can occur during transport and hoisting of the apparatus 10 (e.g. vibration, rocking, sliding, etc.).

Each retention device 21 can be configured to be adjustable between blocked position and a released position. For example, each retention device can include at least one blocking element 21b that can be inserted into the retention device 21 so that the retention device is in a stiff position and can extend stiffly to the heat exchanger 7 for tight contact between inner distal end 21a and the heat exchanger body to support the heat exchanger 7 during transportation and installation. The blocked position can be configured so that the retention device 21 provides load bearing support during transport in multiple different directions including a first direction, which can be an axial direction (e.g. the direction that extends along the length L of the heat exchanger 7) a second direction that can be a radial direction that acts vertically up and down, and a third direction that can be another radial direction that acts side-to-side in a direction that is perpendicular to the axial direction and the second direction. The at least one blocking element can include packing. In some configurations, the packing can be considered to be or include one or more shims. However, the packing of the blocking element 21 can also be other elements that may be substantially larger than what is considered to be a shim structure.

During the heat exchanger installation process that can occur on a site after the apparatus 10 is delivered to a site for installation, the blocking elements 21b can be removed to adjust the position of the retention devices 21 to their released positions so that the inner distal end 21a can accommodate motion and expansion or contraction of the heat exchanger 7 that may occur during operation in the axial direction of the heat exchanger 7. The removed blocking elements 21b, however, can still permit the distal end 21a to engage the heat exchanger 7 and prevent horizontal sideward motion of the heat exchanger when it is in the vertical orientation by providing support in a radial direction that is perpendicular to the length L of the heat exchanger 7. This can result in providing sideward support to the heat exchanger to help maintain the heat exchanger's position and provide additional support to the heat exchanger that can help it avoid being moved due to extreme weather conditions (e.g. extreme wind, etc.) or other phenomena that could occur while the heat exchanger is installed and at a site to help avoid the heat exchanger from becoming damaged from such undesired lateral motion occurring while the heat exchanger is in a vertical orientation.

After the retention devices 21 are attached within the inner chamber 3c and the frame is fully fabricated with the heat exchanger 7 positioned securely within the inner chamber 3c, the apparatus 10 can be in a horizontal orientation H for storage, hauling, and transport to a site for installation at the site. The horizontal orientation H can be a position in which the length L of the apparatus 10 and/or frame 4 extends horizontally between the top 3t and bottom 3b. The length L can be a longest dimension that is longer or larger in size, than a width W of the frame 4 and/or apparatus 10.

As also noted below, in some alternative configurations, the case 3 and frame 4 can be designed to permit a top of the heat exchanger 7 to extend from the top 3t of the case 3 so that an upper portion 7t of the heat exchanger is exposed and external to the frame 4 as indicated in broken line in Figure 1. Such a configuration may be provided where exposing the upper portion 7t of the heat exchanger 7 is able to be safely accommodated via transport and installation while still permitting the frame 4 to help support the heat exchanger 7 when it is installed at a site within the apparatus 10 in the vertical orientation of the apparatus 10.

In some configurations, the frame 4 can be further modified after it is formed. Forexample, an additional top section can be attached or positioned adjacent the top 3t or an extended bottom portion can be attached or positioned adjacent the bottom 3b.

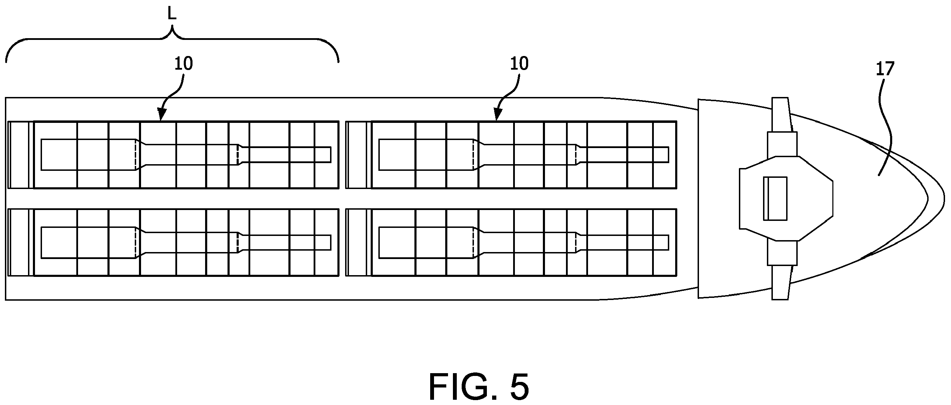

Figure 6 illustrates an example of the apparatus 10 in its horizontal orientation on supports 19 that can be loaded onto a transportation vehicle (e.g. self-propelled modular transporter (SPMT), ship, railcar, flatbed trailer for transport via truck, etc.). Figures 4 and 5 illustrate examples of the apparatus 10 in its horizontal orientation for transport via a transportation vehicle 17, which is a ship in the example of Figures 4 and 5. As noted herein, the transportation vehicle could alternatively be a railcar, a truck, or other suitable transportation vehicle.

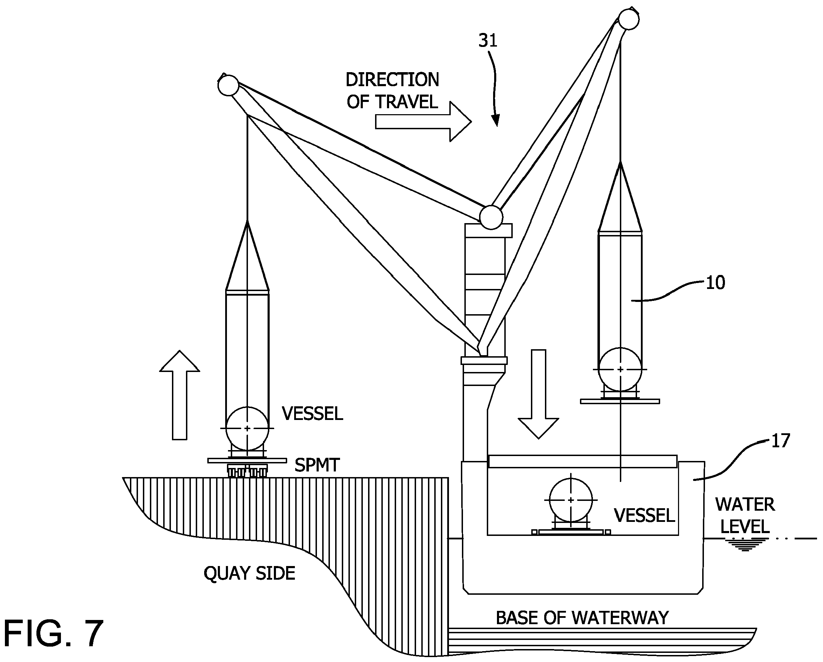

Transport of the apparatus 10 can also include the apparatus 10 being moved in its horizontal orientation H from multiple different vehicles and multiple different intermediate storage locations throughout the delivery transport of the apparatus to a site for installation. For example, the apparatus 10 can be moved in its horizontal orientation by rail or truck to a shipyard, subsequently hauled onto a ship for further transport via a lifting device 31, and thereafter unloaded from the ship for delivery and/or further ground transport to a delivery site for installation at the site while in its horizontal orientation. Figures 7-9 illustrate examples of such intermediate transportation phases. The apparatus 10 can be maintained in its horizontal orientation throughout this transport process to facilitate ease of transport and hauling of the apparatus 10 to a site at which the apparatus 10 will be installed.

Once the apparatus 10 is delivered to a site, it can be in a horizontal orientation H on a ground or on supports that support the apparatus on the ground in its horizontal orientation H. Figure 10 illustrates such a position. In a first installation step ST1, one or more lifting devices 31 (e.g. one or more cranes 33), either alone or in conjunction with other transport vehicles, such as for example one or more SPMTs (not shown), can be used to lift the apparatus 10 so that the top 3t is raise above the bottom 3b. In a second installation step ST2, the lifting device(s) 31 can move the apparatus 10 so that the top 3t is above the bottom 3b and the bottom 3b is on the ground GR or supported on the ground GR by a base or other apparatus support such that the apparatus is in its vertical orientation V. In the vertical orientation, the length L of the apparatus 10 extends vertically from the bottom 3b to the top 3t. The multiple sides between the top 3t and the bottom 3b extend upwardly from the bottom 3b to the top 3t in a longitudinal direction along their length L when the apparatus 10 is in the vertical orientation V as well. The sides 3a have a width W that can extend horizontally a distance that is shorter than a distance of their length when the apparatus 10 is in the vertical orientation V as well.

It should be appreciated that the heat exchanger 7 also has a length L. The length L can extend horizontally when the apparatus 10 is in its horizontal orientation H. When the apparatus 10 is in the vertical orientation V, the length L of the heat exchanger 7 can extend vertically to define a height of the heat exchanger 7.

After being moved to the vertical orientation V, the apparatus 10 can be secured in its orientation at the site. Also, additional installation work can be performed by accessing the frame 4 to enter the inner chamber 3c and using the stairways and/or ladders 5b and platforms 5a. During this work, the retention devices 21 can be adjusted from their blocked positions to their released positions as discussed above (e.g. removal of blocking elements 21b).

For example, after the apparatus is moved to its vertical orientation V and the length L of the apparatus extends vertically, the blocking elements 21b can be removed to adjust the position of the retention devices 21 to their released positions so that the inner distal end 21a can accommodate motion and expansion or contraction of the heat exchanger 7 that may occur during operation in the axial direction of the heat exchanger 7. The removed blocking elements 21b, however, can still permit the distal end 21a to engage the heat exchanger 7 and prevent horizontal sideward motion of the heat exchanger when it the apparatus 10 is in the vertical orientation V by providing support in a radial direction that is perpendicular to the length L of the heat exchanger 7. This can result in providing sideward support to the heat exchanger 7 to help maintain the heat exchanger's position and provide additional support to the heat exchanger 7 that can help it avoid being significantly moved laterally due to weather conditions (e.g. extreme wind, etc.) or other phenomena that could occur while the heat exchanger is installed and at a site, which can help avoid damage to the heat exchanger from such events.

The heat exchanger 7 positioned within the frame 4 and included in the apparatus 10 can be a coil-wound heat exchanger (CWHE). The CWHE can be elongated and have a significant length L. In some embodiments, the CWHE can be up to 80 meters long. The apparatus 10 can be longer than the CWHE so that the frame 4 is sized to encase the CWHE within the inner chamber 3c.

In an alternate configuration, the frame 4 can be designed and structured so that an upper end 7t of the CWHE could extend beyond the frame 4 of the apparatus 10. For example, the frame 4 can be designed and configured so that a top of the CWHE extends from an end of the frame 4 and has a portion that is external to the frame 4 such that the entirety of the CWHE is not encased within the CWHE and the CWHE is positioned in the frame 4 for transport in a horizontal orientation and moveable to its vertical orientation. In such a configuration, the exposed upper portion of the CWHE can be protected sufficiently for transport and the adjustment in orientation.

In addition to being very long, the CWHE or other heat exchanger within the frame 4 can be very heavy. For example, the heat exchanger can be over 200 metric tonnes (MT) or even over 300 MT. Moreover, the frame itself can also be very heavy and can be 200 MT or more than 300 MT in some embodiments. The transportation weight of the apparatus 10 can be very heavy and be over 500 MT in many embodiments (e.g. over 700 MT, over 800 MT, over 900 MT, over 1000 MT, between 500 MT and 1000 MT, etc.).

Embodiments of the apparatus 10 for modular heat exchanger assembly for horizontal transport and vertical orientation installation and processes for making and using the same can be configured to permit a CWHE or other type of heat exchanger to be fabricated and shipped for ease of transport and subsequent installation. For example, embodiments can be adapted so that a CWHE can be fabricated and transported so that it extends horizontally along its longitudinal direction (e.g. its longest dimension) in a horizontal orientation for transport and can subsequently be adjusted on-site into a vertical orientation in which it extends vertically along its longitudinal direction such that the height of the installed CWHE is the distance in which the CWHE vertically extends above the ground. Embodiments can be sized and configured to permit transport of the CWHE in accordance with standardized shipping and hauling practices for ease of transportation and can have a sufficiently sturdy frame to facilitate adjustment of the orientation of the CWHE structure from its horizontal orientation H into its vertical orientation V. Embodiments can permit installation of a CWHE or other large heat exchanger to be performed more quickly and easily. For instance, such installation can occur without requiring use of large scaffolding structures involving large teams of construction personnel. Also, embodiments can be adapted to avoid the heat exchanger having to be added to a formed frame 4 or other support structure on site. Moreover, some embodiments can be adapted so that various electrical and mechanical elements for heat exchanger operation can be integrated into the inner chamber 3c of the case 3 and positioned for ease of installation or start-up operation.

Embodiments can be adapted so that transportation via the horizontal orientation of the heat exchanger 7 (e.g. CWHE) can occur quicker and more easily and at a lower cost of transportation. For example, embodiments can be adapted to permit common or typical haulers, lifts, loaders, ships, and other transport vehicles to be utilized in transportation of the heat exchanger to a site. Once at the site, the use of one or more lifting devices (e.g. jacking tower(s), crane(s), other heavy lifting equipment, etc.) can permit the installation to occur without use of large construction teams or other equipment. This type of installation option is much faster and much less expensive than stick-building the heat exchanger platforms, ladders, etc. that is conventionally needed for installation work. Also, it helps avoid the need for larger teams of construction personnel and the assembly of large scaffolding arrangements.

It should be appreciated that modifications to the embodiments explicitly shown and discussed herein can be made to meet a particular set of design objectives or a particular set of design criteria. For example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of the apparatus for modular heat exchanger assembly for horizontal transport and vertical orientation installation and methods of making and using the same have been shown and described above, it is to be distinctly understood that the invention is not limited thereto but may be otherwise variously embodied and practiced within the scope of the following claims.

## Claims

1. An apparatus for modular heat exchanger assembly for horizontal transport and vertical orientation installation comprising:
a frame comprising:
a case having a top, a bottom, and a plurality of sides extending between the top and bottom, the case having a side opening in communication with an inner chamber defined between the sides, the top, and the bottom, and
at least one side cap attached to the case to cover the side opening,
the frame having a length that extends in a longitudinal direction from the top to the bottom;
a heat exchanger positioned within the inner chamber; and
wherein the frame is sized and configured to facilitate transport of the apparatus in a horizontal orientation for transportation, the length extending horizontally when the apparatus is in the horizontal orientation; and
the frame is sized and configured to facilitate positioning of the apparatus in a vertical orientation for installation at a site, the length extending vertically when the apparatus is in the vertical orientation.

2. The apparatus of claim 1, wherein the at least one side cap comprises:
an outer side, platforms extending from the outer side, and stairways and/or ladders extending from the outer side, the stairways and/or ladders positioned in the inner chamber or positioned external to the inner chamber and the platforms positioned in the inner chamber, the outer side extending between the top and the bottom.

3. The apparatus of claim 1 or 2, comprising:
a plurality of retention devices within the inner chamber positioned to engage the heat exchanger to retain a position of the heat exchanger in the inner chamber.

4. The apparatus of claim 3, wherein each of the retention devices is adjustable between a blocked position and a released position.

5. The apparatus of claim 4, wherein each of the retention devices has at least one blocking element that is removable to adjust the retention device from the blocked position to the released position.

6. A process of installing a heat exchanger, comprising:
forming a case and at least one side cap;
positioning a heat exchanger in an inner chamber of the case;
attaching the at least one side cap to the case to form a frame and cover an open side of the case and enclose the heat exchanger within the inner chamber,
maintaining the frame in a horizontal orientation during transport of the heat exchanger to a site; and
moving the frame into a vertical orientation to install the heat exchanger at the site.

7. The process of claim 6, wherein the horizontal orientation is an orientation in which a length of the case that extends in a longitudinal direction between a top of the case and a bottom of the case extends horizontally.

8. The process of claim 6 or 7, wherein the vertical orientation is an orientation in which a length of the case that extends in a longitudinal direction between a top of the case and a bottom of the case extends vertically.

9. The process of any one of claims 6 to 8, comprising;
positioning retention devices in the inner chamber to engage the heat exchanger to maintain a position of the heat exchange in the inner chamber.

10. The process of claim 9, comprising:
adjusting positions of the retention devices from a first position to a second position.

11. The process of any one of claims 6 to 10, wherein the attaching the at least one side cap to the case to form the frame comprises:
positioning each side cap so that platforms and stairways and/or ladders of the side cap are positioned in the inner chamber; and
welding or fastening each side cap to the case to cover the open side of the case.

12. The process of any one of claims 6 to 11, wherein the moving the frame into a vertical orientation to install the heat exchanger at the site comprises lifting the frame via at least one lifting device to adjust the orientation of the frame to the vertical orientation.

13. The process of claim 12, wherein the at least one lifting device comprises at least one crane.

14. The process of any one of claims 6 to 13, wherein the maintaining the frame in the horizontal orientation during transport of the heat exchanger to the site comprises:
loading the frame in a transportation vehicle while the frame is in the horizontal orientation; and
unloading the frame from the transportation vehicle while the frame is in the horizontal orientation.

15. The apparatus or process of any preceding claim, wherein the heat exchanger is a coil-wound heat exchanger (CWHE).
